# EUROPEAN PATENT APPLICATION

(11) **EP 2 081 067 A2**
(43) Date of publication of application: **22.07.2009**
(21) Application number: 08157236.4
(22) Date of filing: 29.05.2008
(51) Int. Cl.: G02B 6/42, G02B 6/293, H04B 10/24, H04J 14/02

(54) **WDM optical transmit-receive device**

(30) Priority: 15.01.2008 TW 97101568
(71) Applicant: Universal Microelectronics Co., Ltd., Taichung 40850 (TW)
(72) Inventor: Lin, Fang-Zheng, Kaohsiung City (TW); Liu, Wen-Tao, Taipei City (TW)
(74) Representative: Beck & Rössig European Patent Attorneys

(57) **Abstract**

A WDM optical transmit-receive device comprises an optical transceiver assembly (10) and an optical receiver assembly (20). The optical transceiver assembly (10) includes a first optical platform (11), a first optical filter (12), a first photodetector (13) and a laser diode (14), where the first optical platform (11) has a first surface (11a) and a first groove (111) recessed from the first surface (11a), the first optical filter (12) is inserted into the first groove (111), the first photodetector (13) and the laser diode (14) are mounted adjacent to the first optical filter (12). The optical receiver assembly (20) disposed at one side of the optical transceiver assembly (10) includes a second optical platform (21), a second optical filter (22), a second photodetector (23) and a connecting fiber (24), where the second optical platform (21) has a second surface (21a) and a second groove (211) recessed from the second surface (21a), the second optical filter (22) is inserted into the second groove (211), the second photodetector (23) is mounted adjacent to the second optical filter (22), the connecting fiber (24) has a first end portion (24a) mounted adjacent to the second optical filter (22).

## Description

### FIELD OF THE INVENTION

The present invention relates generally to an optical transmit-receive device, more particularly to a WDM (wavelength division multiplexer) optical transmit-receive device.

### BACKGROUND OF THE INVENTION

Recently, PON (passive optical network) has abruptly increased for optical access technique to become a mainstream within FTTH (fiber to the home) solutions, such as techniques of Diplexer and Triplexer applied for GPON and EPON are greatly valued. Within PON structure, Diplexer equipped in ONU (optical network unit) mainly serves transmitting an optical signal of upstream wavelength at 1310nm and receiving an optical signal of downstream wavelength at 1490nm so as to carry out upstream/downstream data transmission, and Triplexer equipped in ONU, except serves same functions as Diplexer does, also receives an optical signal of downstream wavelength at 1550nm for CATV (community antenna television) signal transmission, but comparatively is more expensive than Diplexer. However, present demand of customer for using CATV signal is not popularized, which makes optical network system builder difficult to adopt between Triplexer and Diplexer. In case of adopting Triplexer, low using demand and high building cost are concerned economically, if Diplexer is selected, it cannot meet future use of CATV signal in quantity. Therefore, how to solve the problem mentioned above becomes a very important issue.

### SUMMARY OF THE INVENTION

It is an object of the invention to provide a WDM optical transmit-receive device, which comprises an optical transceiver assembly and an optical receiver assembly. The optical transceiver assembly includes a first optical platform, a first optical filter, a first photodetector and a laser diode, where the first optical platform has a first surface, a first groove recessed from the first surface and a first signal coupling end, the first optical filter is inserted into the first groove, the first photodetector and the laser diode are mounted adjacent to the first optical filter. The optical receiver assembly is disposed at one side of the optical transceiver assembly and includes a second optical platform, a second optical filter, a second photodetector and a connecting fiber, where the second optical platform has a second surface, a second groove recessed from the second surface and a second signal coupling end, the second filter is inserted into the second groove, the second photodetector is mounted adjacent to the second optical filter, the connecting fiber has a first end adjacent to the second optical filter and a second end. If there is no use demand of CATV signal from ONU, then an optical network coupling end is capable of coupling to the optical transceiver assembly which allows Diplexer data transmission of upstream/downstream (1310nm/1490nm) by applying the optical transceiver assembly. Contrarily when ONU has use demand of CATV signal, the optical network coupling end is capable of coupling to the optical receiver assembly, such as to the connecting fiber of the optical receiver assembly which enables simultaneous Triplexer data transmission of upstream/downstream (1310nm/1490nm/1550) by applying the optical receiver assembly and the optical transceiver assembly. The optical transmit-receive device of this invention which is capable for performing both functions of Diplexer and Triplexer in accordance with ONU demand may provide high expanding convenience in efficiency and low cost for building network system because its price is lower than that of known Triplexer.

### DESCRIPTION OF THE DRAWINGS

Fig.1 shows a structure of a WDM optical transmit-receive device in according with a preferred embodiment of this invention.
Fig.2 shows another structure of the WDM optical transmit-receive device.
Fig.3 shows action of that the WDM optical transmit-receive device handles optical signal of Diplexer.
Fig.4 shows action of that the WDM optical transmit-receive device handles optical signal of Triplexer.

### DETAILED DESCRIPTION OF THIS INVENTION

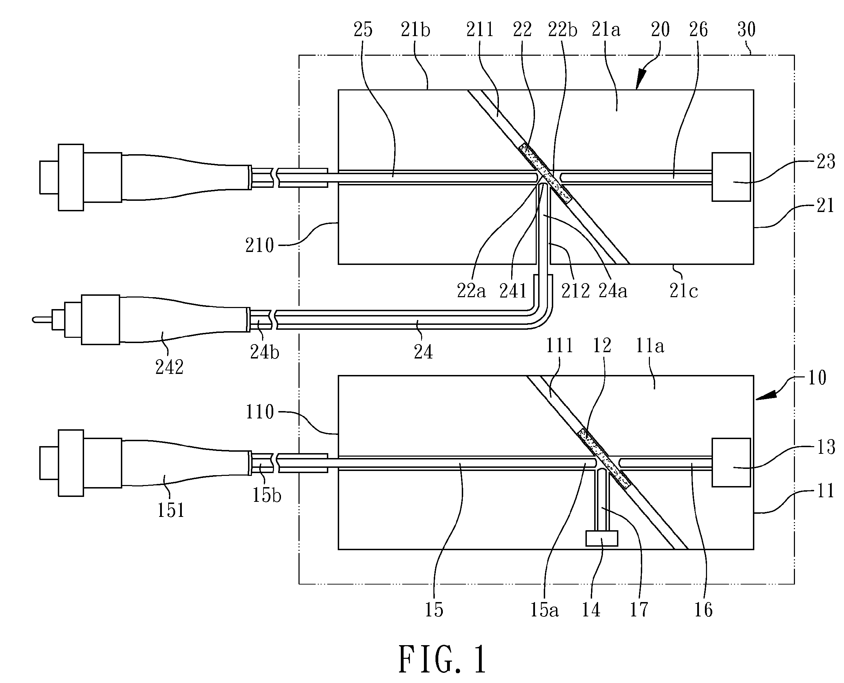

Fig.1 shows a WDM optical transmit-receive device (wavelength division multiplexer) in accordance with a preferred embodiment of this invention, which can be utilized to handle the optical signals of Diplexer (1310nm/1490) and Triplexer (1310nm/1490nm/1550nm) and comprises an optical transceiver assembly 10, an optical receiver assembly 20 and a casing 30. The optical transceiver assembly 10 includes a first optical platform 11, a first optical filter 12, a first photodetector 13, a laser diode 14, a first fiber 15, a fourth fiber 16 and a fifth fiber 17, wherein the first optical platform 11 is disposed within the casing 30 and has a first surface 11a, a first groove 111 recessed from the first surface 11a and a first signal coupling end 110. In this embodiment, the first optical filter 12 is inserted into the first groove 111, the first photodetector 13 is mounted adjacent to the first optical filter 12 and capable of receiving the optical signal of wavelength at 1490nm, the laser diode 14 is mounted adjacent to the first optical filter 12 and capable of transmitting the optical signal of wavelength at 1310nm. The first fiber 15 is mounted at the first signal coupling end 110 and has a first end 15a mounted adjacent to the first optical filter 12 and a second end 15b disposing a first fiber connector 151. Besides, the fourth fiber 16 is mounted between the first photodetector 13 and the first optical filter 12, the fifth fiber 17 is mounted between the laser diode 14 and the first optical filter 12, and preferably the first fiber 15, the fourth fiber 16 and the fifth fiber 17 are lens fiber.

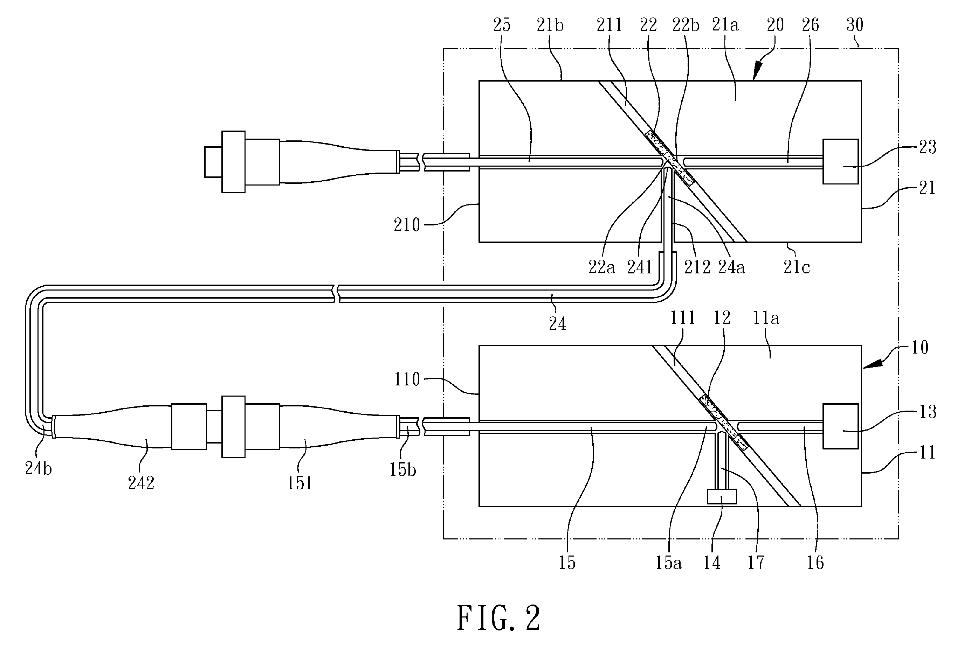

With reference to Fig.1 and 2, the optical receiver assembly 20 which is disposed at one side of the optical transceiver assembly 10 includes a second optical platform 21, a second optical filter 22, a second photodetector 23, a connecting fiber 24, a second fiber 25 and a third fiber 26. The second optical platform 21 is disposed within the casing 30 and has a second surface 21a, a first lateral 21b, a second lateral 21c opposite to the first lateral 21b, a second groove 211 recessed from the second surface 21a, a reflective groove 212 recessed from the second surface 21a and a second signal coupling end 210, where the second groove 211 communicates with the first lateral 21b and the second lateral 21c, the reflective groove 212 communicates with the second groove 211. In this embodiment, the second optical filter 22 which is inserted into the second groove 211 has a coating surface 22a and a back 22b opposite to the coating surface 22a, the coating surface 22a is capable of reflecting the optical signals of wavelength at 1310nm and 1490nm and allowing the optical signal of wavelength at 1550nm to pass through. The second photodetector 23 is mounted adjacent to the back 22b of the second optical filter 22 and capable of receiving the optical signal of wavelength at 1550nm. The connecting fiber 24 has a first end portion 24a which is mounted adjacent to the coating surface 22a of the second optical filter 22 and may be affixed into the reflective groove 212 and a second end portion 24b, in this embodiment, the first end portion 24a has a lens structure 241 formed thereon, the second end portion 24b is capable of coupling to the second end 15b of the first fiber 15 of the optical transceiver assembly 10, and preferably the second end portion 24b disposes a second fiber connector 242 that is capable of connecting to the first fiber connector 151 of the first fiber 15. With reference again to Fig.1, the second fiber 25 is mounted at the second signal coupling end 210 of the second optical platform 21 and one end of the second fiber 25 is mounted adjacent to the coating surface 22a of the second optical filter 22. There is an included angle approximately 90 degree between the first end portion 24a of the connecting fiber 24 and the second fiber 25 in this embodiment. Besides, the third fiber 26 is mounted between the second photodetector 23 and the second optical filter 22, and preferably the second fiber 25 and the third fiber 26 are lens fiber.

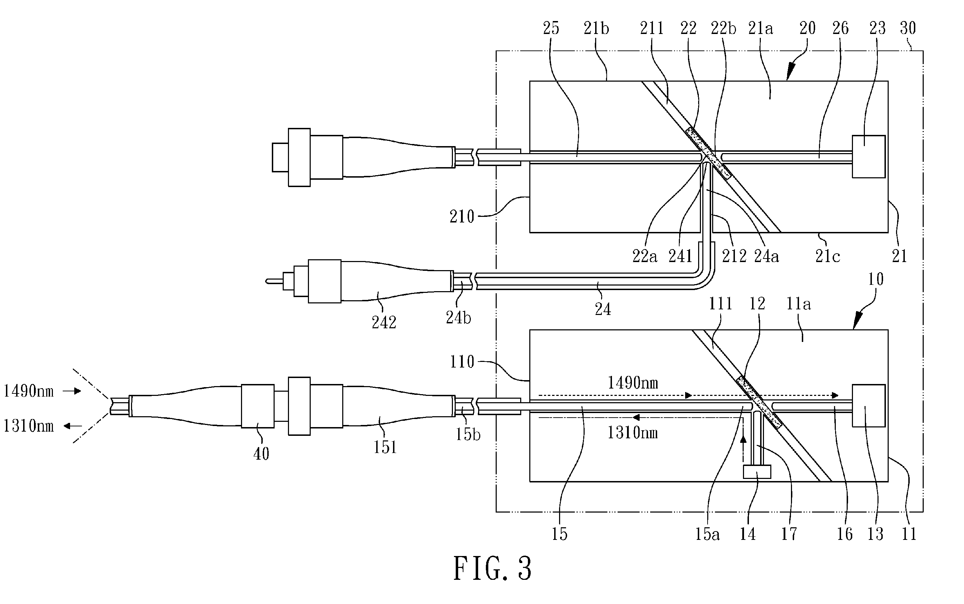

The action about handling the optical signal of Diplexer 1310nm/1490nm in accordance with this invention is shown by Fig.3, which is to couple the second end 15b of the first fiber 15 of the optical transceiver assembly 10 to an optical network coupling end 40. In this embodiment, the optical transceiver assembly 10 only handles the optical signal of Diplexer 1310nm/1490nm without any action from the optical receiver assembly 20 in this case. The laser diode 14 is assigned to emit the optical signal of upstream wavelength at 1310nm which enters the fifth fiber 17 first, reflected by the first optical filter 12 to enter the first fiber 15, finally upstream outputted via the optical network coupling end 40. The first photodetector 13 is assigned to receive the optical signal of downstream wavelength at 1490nm, in which the optical signal of downstream wavelength at 1490 nm enters the first fiber 15 via the optical network coupling end 40, passing through the first optical filter 12 and then entering the fourth fiber 16, finally received by the first photodetector 13.

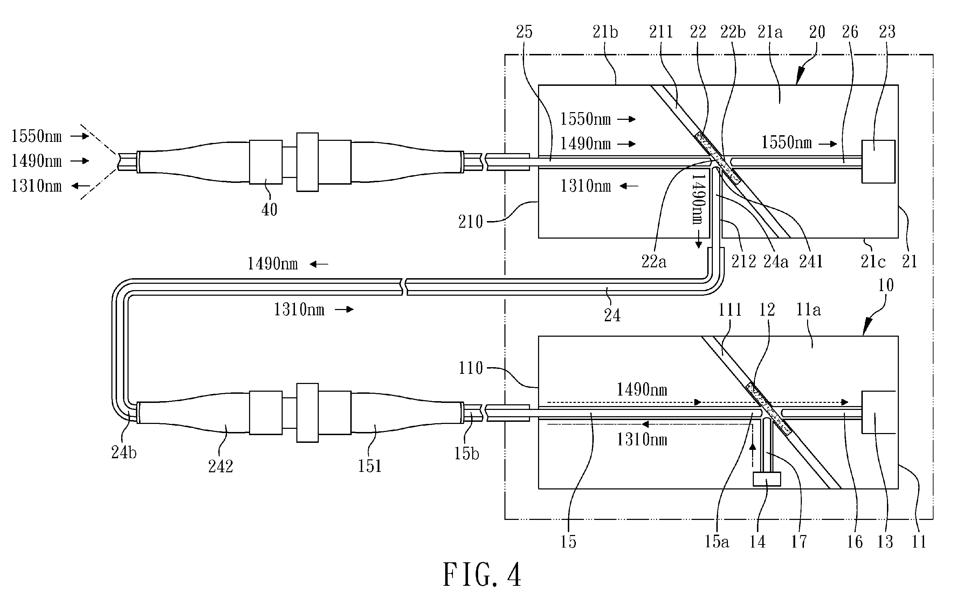

The action about handling the optical signal of Triplexer 1310nm/1490nm/1550nm in accordance with this invention is shown by Fig.4, which is respectively to couple one end of the second fiber 25 of the optical receiver assembly 20 to the optical network coupling end 40 and connect the second fiber connector 242 of the connecting fiber 24 with the first fiber connector 151 of the first fiber 15 of the optical transceiver assembly 10. In this embodiment, the optical receiver assembly 20 and the optical transceiver assembly 10 are simultaneous to handle the optical signal of Triplexer 1310nm/1490nm/1550nm. The laser diode 14 is assigned to emit optical signal of upstream wavelength at 1310nm which enters the fifth fiber 17 first, reflected by the first optical filter 12 to enter the first fiber 15, and then entering the connecting fiber 24 and reflected by the second optical filter 22 to enter the second fiber 25, finally upstream outputted via the optical network coupling end 40. The second photodetector 23 is assigned to receive the optical signal of downstream wavelength at 1550nm, in which the optical signal of downstream wavelength at 1550nm enters the second fiber 25 via the optical network coupling end 40, passing through the second optical filter 22 and then entering the third fiber 26, finally received by the second photodetector 23. The optical signal of downstream wavelength at 1490nm enters the second fiber 25 via the optical network coupling end 40, reflected by the second optical filter 22 to enter the connecting fiber 24, and then entering the first fiber 15 and passing through the first optical filter 12 to enter the fourth fiber 16, finally received by the first photodetector 13.

Accordingly, the optical transmit-receive device of this invention which is capable of performing either Diplexer transceiver or Triplexer transceiver function in accordance with ONU demand may provide high expanding convenience in efficiency and low cost for building network system because its price is lower than that of known Triplexer transceiver.

While the present invention has been particularly illustrated and described in detail with respect to the preferred embodiments thereof, it will be clearly understood by those skilled in the art that various changed in form and details may be made without departing from the spirit and scope of the present invention.

## Claims

1. A WDM optical transmit-receive device comprising:
an optical transceiver assembly (10) including:
a first optical platform (11) having a first surface (11a), a first groove (111) recessed from the first surface (11a) and a first signal coupling end (110);
a first optical filter (12) inserted into the first groove (111);
a first photodetector (13) mounted adjacent to the first optical filter (12); and
a laser diode (14) mounted adjacent to the first optical filter (12); and
an optical receiver assembly (20) disposed at one side of the optical transceiver assembly (10), including:
a second optical platform (21) having a second surface (21a), a second groove (211) recessed from the second surface (21a) and a second signal coupling end (210);
a second optical filter (22) inserted into the second groove (211);
a second photodetector (23) mounted adjacent to the second optical filter (22); and
a connecting fiber (24) having a first end portion (24a) and a second end portion (24b), the first end portion (24a) being mounted adjacent to the second optical filter (22).

2. The WDM optical transmit-receive device in accordance with claim 1, wherein the optical transceiver assembly (10) further includes a first fiber (15) mounted at the first signal coupling end (110) of the first optical platform (11), the optical receiver assembly (20) further includes a second fiber (25) mounted at the second signal coupling end (210) of the second optical platform (21).

3. The WDM optical transmit-receive device in accordance with claim 2, wherein the first fiber (15) of the optical transceiver assembly (10) has a first end (15a) and a second end (15b), the first end (15a) is mounted adjacent to the first optical filter (12), the second end portion (24b) of the connecting fiber (24) is capable of coupling to the second end (15b) of the first fiber (15).

4. The WDM optical transmit-receive device in accordance with claim 3, wherein the second end (15b) of the first fiber (15) disposes a first fiber connector (151), the second end portion (24b) of the connecting fiber (24) disposes a second fiber connector (242), the second fiber connector (242) is capable of connecting to the first fiber connector (151).

5. The WDM optical transmit-receive device in accordance with one of claims 2 to 4, wherein the second optical filter (22) of the optical receiver assembly (20) has a coating surface (22a) and a back (22b) opposite to the coating surface (22a), one end of the second fiber (25) is mounted adjacent to the coating surface (22a) of the second optical filter (22).

6. The WDM optical transmit-receive device in accordance with claim 5, wherein the first end portion (24a) of the connecting fiber (24) is mounted adjacent to the coating surface (22a) of the second optical filter (22).

7. The WDM optical transmit-receive device in accordance with claim 6, wherein there is an included angle of approximately 90 degree between the first end portion (24a) of the connecting fiber (24) and the second fiber (25).

8. The WDM optical transmit-receive device in accordance with one of claims 1 to 7, wherein the second photodetector (23) is mounted adjacent to the back (22b) of the second optical filter (22).

9. The WDM optical transmit-receive device in accordance with one of claims 1 to 8, wherein the first end portion (24a) of the connecting fiber (24) has a lens structure (241) formed thereon.

10. The WDM optical transmit-receive device in accordance with one of claims 1 to 9, wherein the optical receiver assembly (20) further includes a third fiber (26) mounted between the second photodetector (23) and the second optical filter (22).

11. The WDM optical transmit-receive device in accordance with one of claims 1 to 10, wherein there is a reflective groove (212) recessed from the second surface (21a) of the second optical platform (21), the reflective groove (212) communicates with the second groove (211), the first end portion (24a) of the connecting fiber (24) is affixed into the reflective groove (212).

12. The WDM optical transmit-receive device in accordance with one of claims 1 to 11, wherein the second optical platform (21) has a first lateral (21b) and a second lateral (21c) opposite to the first lateral (21b), the second groove (211) communicates with the first lateral (21b) and the second lateral (21c).

13. The WDM optical transmit-receive device in accordance with one of claims 1 to 12, wherein the optical transceiver assembly (10) further includes a fourth fiber (16) mounted between the first photodetector (13) and the first optical filter (12).

14. The WDM optical transmit-receive device in accordance with one of claims 1 to 13, wherein the optical transceiver assembly (10) further includes a fifth fiber (17) mounted between the laser diode (14) and the first optical filter (12).

15. The WDM optical transmit-receive device in accordance with one of claims 1 to 14, further comprising a casing (30), the first optical platform (11) and the second optical platform (21) are disposed within the casing (30).
